# EUROPÄISCHE PATENTANMELDUNG

(11) **EP 0 963 790 A2**
(43) Veröffentlichungstag der Anmeldung: **15.12.1999**
(21) Anmeldenummer: 99111216.0
(22) Anmeldetag: 09.06.1999
(51) Int. Cl.: B01L 3/00, G01N 21/03

(54) **Mikrotiterplatte**

(30) Priorität: 09.06.1998 DE 29810241 U; 16.06.1998 DE 29810554 U
(71) Anmelder: Krauser, Peter J., 66271 Kleinblittersdorf (DE)
(72) Erfinder: Krauser, Peter J., 66271 Kleinblittersdorf (DE)
(74) Vertreter: Vièl, Christof, Dipl.-Ing.

(57) **Zusammenfassung**

Die Erfindung betrifft eine Platte mit einer Vielzahl von Kammern zur Verwendung insbesondere in der Mikrobiologie, wobei zumindest der Boden der Kammern lichtdurchlässig ist.

In der Regel sind die Böden der Kammern in einer durchgehenden Platte angeordnet, so daß sich bei den optischen Messungen eine Streuung des Lichtes ergibt, die sowohl bei Messungen von der Öffnungsseite der Kammer als auch bei Messungen von der Kammerunterseite zu einer Beeinträchtigung der Meßergebnisse führen kann. Des weiteren kann sich eine Streuung des Lichtes über die Wände der Kammern ergeben.

Im Rahmen der vorliegenden Erfindung wurde eine Platte gemäß dem Oberbegriff geschaffen, bei der die Lichtstreuung deutlich reduziert und somit eine genauere Messung möglich ist.

Die Vorteile der Erfindung gegenüber dem Stand der Technik bestehen im wesentlichen darin, daß die Lichtstreuung wirksam vermindert werden kann und somit eine höhere Meßgenauigkeit erzielbar ist.

## Beschreibung

Die Erfindung betrifft eine Platte mit einer Vielzahl von Kammern zur Verwendung insbesondere in der Mikrobiologie, wobei zumindest der Boden der Kammern lichtdurchlässig ist.

Derartige Platten werden als Mikrotiterplatten oder als Micro Well®-Platten bezeichnet. Sie werden in zahlreichen Bereichen (Biochemie, Molekularbiologie, Klinische Chemie, Analytik), u.a. bei Antikörper-Screenings, serologischen Tests, Lagerung und Screening von Komponenten und DNA-Bibliotheken verwendet. Die Platten sind in der Regel aus transparentem Material, z.B. Polystyrol, gefertigt und ermöglichen so optische Messungen, z.B. Luminiszenzmessungen, mit unter den Kammern angeordneten Dioden. Typischerweise sind auf einer Platte derzeit 6 Kammern, 96 Kammern (8 Reihen à 12 Kammern) oder auch 384 Kammern (16 Reihen à 24 Kammern) in parallelen Reihen angeordnet, die je nach Anwendungsgebiet einen runden, flachen, konischen oder C-förmigen Boden aufweisen.

Da die Böden der Kammern in der Regel in einer durchgehenden Platte angeordnet sind, ergibt sich bei den optischen Messungen eine Streuung des Lichtes, die sowohl bei Messungen von der Öffnungsseite der Kammer als auch bei Messungen von der Kammerunterseite zu einer Beeinträchtigung der Meßergebnisse führen kann. Des weiteren kann sich eine Streuung des Lichtes über die Wände der Kammern ergeben.

Aufgabe der Erfindung ist es somit, eine Platte gemäß dem Oberbegriff zu schaffen, bei der die Lichtstreuung deutlich reduziert und somit eine genauere Messung möglich ist.

Diese Aufgabe wird erfindungsgemäß dadurch gelöst, daß im Bereich des Bodens einer Kammer eine optische Linse oder lichtreflektierende Mittel vorgesehen sind.

Durch diese Linse bzw. die lichtreflektierenden Mittel kann die Lichtstreuung wirksam vermindert werden, so daß eine präzisere optische Messung möglich ist.

Eine Weiterbildung der Erfindung besteht darin, daß die optische Linse eine Konvexlinse ist.

In vorteilhafter Weise wird durch die Konvexlinse das Licht gebündelt auf eine unter der Kammer angeordnete Meßdiode geleitet.

Eine andere Ausbildung der Erfindung besteht darin, daß die optische Linse eine Konkavlinse ist.

Je nach Anwendungsgebiet kann auch eine Konkavlinse von Vorteil sein.

Es liegt im Rahmen der Erfindung, daß der Boden der Kammer als optische Linse ausgebildet ist.

Hierdurch wird die Streuung des Lichtes am wirksamsten vermindert, da im Bereich des Bodens der Kammer die Streuung hervorgerufen wird.

Ebenso ist es vorteilhaft, daß in dem Boden der Kammer die lichtreflektierenden Mittel angeordnet sind.

Es ist vorteilhaft, daß die optische Linse die Wand der Kammer umfaßt.

Ebenso ist es zweckmäßig, daß die lichtreflektierenden Mittel die Wand der Kammer umfassen.

Eine andere Ausbildung der Erfindung besteht darin, daß unterhalb des Bodens der Kammer eine optische Linse oder lichtreflektierende Mittel angeordnet ist.

Hierdurch wird zwar die Lichtstreuung in geringerem Maße reduziert als bei der Ausbildung des Bodens der Kammer als optische Linse bzw. als lichtreflektierende Mittel, dennoch ergibt sich gegenüber dem Stand der Technik eine Verminderung der Streuung. Diese Ausbildung der Erfindung kann relativ leicht realisiert werden, indem auf der Unterseite der Bodenplatte unterhalb einer jeden Kammer eine optische Linse bzw. lichreflektierende Mittel angeordnet werden.

Es kann zweckmäßig sein, daß in der Mitte einer zwischen zwei Kammern angeordneten gemeinsamen Wand ein optisch reflektierende Fläche oder eine lichtundurchlässige Fläche vorgesehen ist.

Dies führt zu einer weiteren Verminderung der Lichtstreuung, da die Wand der Kammer in ihrem unteren Bereich mit der die Streuung des Lichtes verursachenden Bodenplatte verbunden ist.

Schließlich ist im Rahmen der Erfindung vorgesehen, daß die lichtreflektierenden Mittel als Prisma ausgebildet sind.

Die Vorteile der Erfindung bestehen somit darin, daß die Lichtstreuung wirksam vermindert werden kann und somit eine höhere Meßgenauigkeit erzielbar ist.

Im folgenden wird ein Ausführungsbeispiel der Erfindung anhand von Zeichnungen dargestellt.

Es zeigen
- Fig. 1: eine Draufsicht auf eine erfindungsgemäße Platte,
- Fig. 2: eine Seitenansicht einer erfindungsgemäßen Platte,
- Fig. 3a und Fig 3b: Detailansichten des Kreisinhaltes zu Fig. 2.

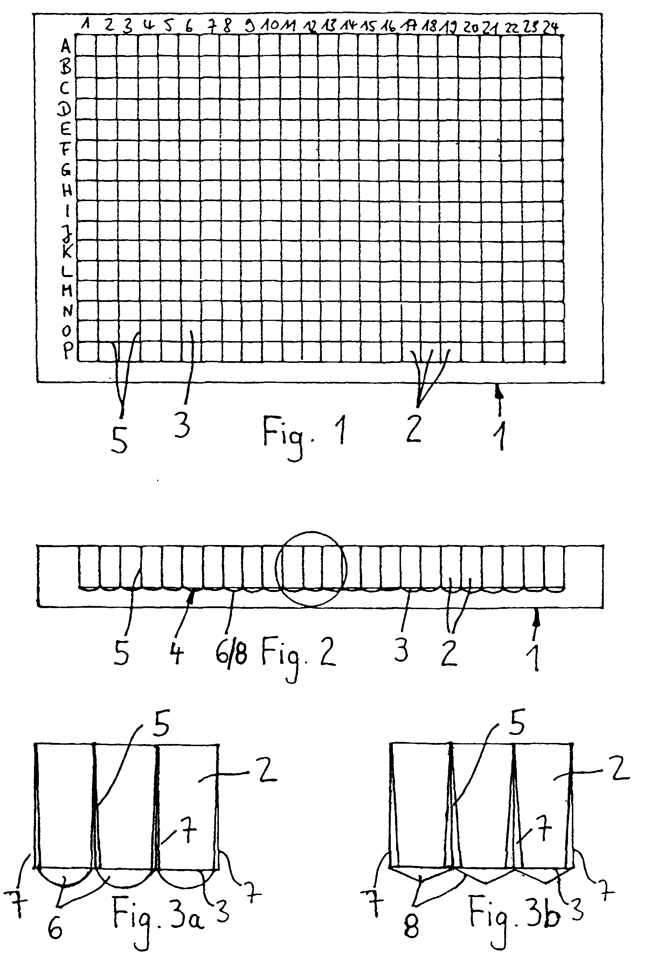

Wie in Fig. 1 dargestellt, besteht eine erfindungsgemäße (Mikrotiter-)Platte 1 aus einem ca. 1 cm hohen Polystyrol-Rechteck, in dem in Reihen (hier 16 Reihen) Kammern 2 (hier 24 Kammern pro Reihe) angeordnet sind. Die Kammern 2 weisen im dargestellten Beispiel einen quadratischen Querschnitt auf, wobei allerdings auch Platten 1 mit anderem, z.B. rundem, Kammerquerschnitt möglich sind.

Wie aus Fig. 2 ersichtlich ist, wird der Boden 3 der Kammern 2 durch eine Bodenplatte 4 gebildet, die sich über die gesamte mit Kammern 2 versehene Fläche der Platte 1 erstreckt. Da die Kammern 2 im gezeigten Beispiel zudem gemeinsame, durchgehende Wände 5 aufweisen, ergibt sich bei optischen Meßverfahren, z.B. luminometrischen Verfahren, aufgrund der Lichtleitung in dem Boden 3 und den Wänden 5, eine starke Streuung des Meßlichtes über die Kammern 2 hinweg. Dies führt zu einer Verfälschung der Meßergebnisse.

Erfindungsgemäß ist daher vorgesehen (Fig. 3a), daß der Boden 3 der Kammern 2 als optische Linse 6 ausgebildet ist, und zwar vorzugsweise als Konvexlinse. Besonders vorteilhaft ist die Einbeziehung der Wände 5 der Kammer 2 in die optische Linse, was insbesondere bei Kammern 2 mit rundem Querschnitt leicht zu realisieren ist, da dort die Wände 5 zweier benachbarter Kammern 2 nur in einem kleinen Bereich zusammenstoßen.

Alternativ (Fig. 3b) kann der Boden 3 der Kammern 2 auch als lichtreflektierendes Mittel 8, z.B. als Prisma, ausgebildet sein, so daß das Licht zur Öffhung der Kammern 3 hin reflektiert wird. Dies ist dann vorteilhaft, wenn die Messung von oben erfolgt.

Die Form des Bodens 3 (z.B. flach, zur Mitte hin abfallend) der Kammern 2 wird durch die in bzw. unter dem Boden angeordnete optische Linse 6 oder die lichtreflektierenden Mittel 8 nicht beeinflußt.

In dem Bereich, in dem zwei Kammern 2 eine gemeinsame Wand 5 aufweisen, ist es vorteilhaft, eine optisch reflektierende Fläche 7 oder eine lichtundurchlässige Fläche (z.B. eine schwarze Fläche) vorzusehen, wodurch erreicht wird, daß die Kammern 2 jeweils getrennte optische Systeme mit minimaler Lichtstreuung sind.

## Patentansprüche

1. Platte mit einer Vielzahl von oben offenen Kammern zur Verwendung insbesondere in der Mikrobiologie, wobei zumindest der Boden der Kammern lichtdurchlässig ist, **dadurch gekennzeichnet**, daß im Bereich des Bodens (3) einer Kammer (2) eine optische Linse (6) oder lichtreflektierende Mittel (8) vorgesehen sind.

2. Platte gemäß Anspruch 1, **dadurch gekennzeichnet**, daß die optische Linse (6) eine Konvexlinse ist.

3. Platte gemäß Anspruch 1, **dadurch gekennzeichnet**, daß die optische Linse (6) eine Konkavlinse ist.

4. Platte gemäß Anspruch 1, **dadurch gekennzeichnet**, daß der Boden (3) der Kammer (2) als optische Linse (6) ausgebildet ist.

5. Platte gemäß Anspruch 1, **dadurch gekennzeichnet**, daß in dem Boden (3) der Kammer (2) die lichtreflektierenden Mittel (8) angeordnet sind.

6. Plane gemäß Anspruch 4, **dadurch gekennzeichnet**, daß die optische Linse (6) die Wand (5) der Kammer (2) umfaßt.

7. Platte gemäß Anspruch 5, **dadurch gekennzeichnet**, daß die lichtreflektierenden Mittel (8) die Wand (5) der Kammer (2) umfassen.

8. Platte gemäß Anspruch 1, **dadurch gekennzeichnet**, daß unterhalb des Bodens (3) der Kammer (2) eine optische Linse (6) oder lichtreflektierende Mittel angeordnet sind.

9. Platte gemäß Anspruch 6 oder Anspruch 7, **dadurch gekennzeichnet**, daß in der Mitte einer zwischen zwei Kammern (2) angeordneten gemeinsamen Wand (5) ein optisch reflektierende Fläche (7) oder eine lichtundurchlässige Fläche vorgesehen ist.

10. Platte gemäß Anspruch 1, **dadurch gekennzeichnet**, daß die lichtreflektierenden Mittel (8) als Prisma ausgebildet sind.
